# EUROPÄISCHE PATENTSCHRIFT

(11) **EP 2 678 367 B1**
(45) Veröffentlichungstag und Bekanntmachung des Hinweises auf die Patenterteilung: **19.11.2014**
(21) Anmeldenummer: 12704423.8
(22) Anmeldetag: 20.02.2012
(51) Int. Cl.: C08G 101/00, C08G 63/668, C08G 18/22, C08G 63/48, C08G 18/40, C08G 18/48, C08G 18/18, C08G 18/42

(54) **POLYESTERPOLYOLE AUF BASIS AROMATISCHER DICARBONSÄUREN UND DARAUS HERGESTELLTE POLYURETHANHARTSCHÄUME**
POLYESTER POLYOLS ON THE BASIS OF AROMATIC DICARBON ACIDS AND POLYURETHANE RIGID FOAMS OBTAINED THEREFROM
POLYESTERPOLYOLES À BASE D'ACIDES DE DICARBONE AROMATIQUES ET MOUSSES DE POLYURÉTHANE AINSI OBTENUES

(30) Priorität: 23.02.2011 EP 11155611
(43) Veröffentlichungstag der Anmeldung: 01.01.2014
(73) Patentinhaber: BASF SE, 67056 Ludwigshafen (DE)
(72) Erfinder: GEHRINGER, Lionel, F-67470 Schaffhouse-pres-Seltz (FR); KAMPF, Gunnar, 32351 Stemwede-Haldem (DE); ZARBAKHSH, Sirus, Hong Kong (CN); ANDERS, Joachim-Thierry, 01328 Dresden (DE)
(86) Internationale Anmeldenummer: PCT/EP2012/052822
(87) Internationale Veröffentlichungsnummer: WO 2012/113737

(56) Entgegenhaltungen:
- EP-A2- 2 177 555
- WO-A2-2010/043624
- US-A- 3 138 562

## Beschreibung

Die vorliegende Erfindung betrifft Ein Verfahren zur Herstellung von Polyesterpolyolen auf Basis aromatischer Dicarbonsäuren, sowie deren Verwendung zur Herstellung von Polyurethanhartschaumstoffen.

Die Herstellung von Polyurethanhartschaumstoffen durch Umsetzung von organischen oder modifizierten organischen Di- oder Polyisocyanaten mit höhermolekularen Verbindungen mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Beispielhaft genannt sei das Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel. Durch geeignete Wahl der Aufbaukomponenten und ihrer Mengenverhältnisse können Polyurethanschaumstoffe mit sehr guten mechanischen Eigenschaften hergestellt werden.

Im Rahmen der vorliegenden Offenbarung werden die Begriffe "Polyesterpolyol", "Polyesterol", "Polyesteralkohol" und die Abkürzung "PESOL" gleichbedeutend verwendet. Die Abkürzung "PEOL" steht für Polyetherol, was gleichbedeutend ist mit Polyetheralkohol. "Polyol" bezeichnet eine Verbindung mit mindestens zwei freien OH-Gruppen.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A 1003714 bzw. US-A 5,051,528 werden derartige Umesterungen unter Einsatz von Methanol und Umesterungskatalysatoren beschrieben.

US 3,138,562, das sich mit "Cellular Polyurethane Plastics" befasst, offenbart ein Verfahren zur Herstellung von Polyesterpolyolen, wobei trifunktionelle Alkohole (TMP) verwendet werden. Es wird nicht erwähnt, wie die Edukte, bspw. Polyetheralkohole (propoxyliertes Glycerin), hergestellt werden.

Ferner ist bekannt, dass Terephthalsäure-basierte Ester bezüglich des Brandverhaltens Phthalsäure-basierten Estern überlegen sind. Dies findet zum Beispiel in WO 2010/043624 Ausdruck. Auch Polyetherpolyole können zur Herstellung von Polyurethanen, sowie als Komponente zum Aufbau von Polyesterolen, eingesetzt werden.

Im Regelfall werden diese Polyetherpolyole durch katalysierte Alkoxylierung eines OH-funktionellen Starters hergestellt.

Als Alkoxylierungs-Katalysatoren werden standardmäßig basische Verbindungen, insbesondere KOH, eingesetzt. Auch Doppelmetallcyanid (DMC)-Katalysatoren oder Carbene werden in manchen Fällen eingesetzt.

Bei den oft verwendeten KOH-Katalysatoren für die Alkoxylierung von OH-funktionellen Verbindungen muss jedoch nach der Umsetzung noch ein Aufarbeitungsschritt erfolgen, um den Katalysator vom Produkt abzutrennen. Diese Aufarbeitung erfolgt normalerweise durch Neutralisation und anschließende Filtration. Dabei bleiben allerdings meist gewisse Mengen des Produkts am abzutrennenden Katalysator; die Produktausbeute sinkt damit.

Wünschenswert wäre es, wenn auf die Aufarbeitung der Polyetherole verzichtet werden könnte (u. a. aufgrund von Polyolverlusten und der notwendigen Investition in diesen Anlagenteil). Bei der routinemäßig angewandten KOH-Katalyse würde jedoch der basische Katalysator im Polyetherol verbleiben und kann die nachfolgende säurekatalysierte Veresterung, zur Herstellung von Polyesterolen, behindern.

Der zeitaufwändige zusätzliche Verfahrensschritt der Aufarbeitung kann vermieden werden, wenn anstelle von KOH ein aminischer Katalysator eingesetzt wird. Diese Aminkatalysatoren können im Regelfall im Produkt verbleiben.

Falls jedoch das Polyetherol-Produkt durch Veresterung z. B. mit einer Dicarbonsäure weiter zu einem Polyesterpolyol umgesetzt werden soll, kann der im Polyetherol verbliebene Aminkatalysator ebenfalls Probleme verursachen, da dieser die gewöhnlicherweise Lewissäure-katalysierte Veresterung behindert.

Ferner ist bekannt, dass Aminverbindungen in der Regel die Hydrolysestabilität des Polyesterols verringern.

Es stellte sich somit die Aufgabe, ein unter anderem aus einem Polyetherol aufgebauten Polyesterpolyol bereitzustellen, das mit möglichst geringem Aufwand (also u. a. mit möglichst wenigen Aufarbeitungs- und Reinigungsschritten) hergestellt werden kann, und zudem problemlos bei der Polyurethan (PU)-Herstellung eingesetzt werden kann und dabei gute Ergebnisse im PU liefert.

Überraschenderweise konnte die erwähnte Aufgabe nun durch Einsatz einer Polyetherpolyol-komponente im Polyesterpolyol gelöst werden, die durch Umsetzung eines Polyols, insbesondere Polyetheralkohols, mit einer Funktionalität von größer oder gleich 2 mit mindestens einem Alkylenoxid unter Aminkatalyse herstellbar ist.

Gegenstand der vorliegenden Erfindung ist ein Verfahren zur Herstellung eines Polyesterpolyols, wobei
- ein Polyetheralkohol (d) mit einer Funktionalität größer oder gleich 2 durch Alkoxylierung eines Polyols (g) mit einer Funktionalität größer oder gleich 2 in Gegenwart eines Amins als Katalysator hergestellt wird,
- sowie optional ein Polyetheralkohol (e) mit einer Funktionalität größer oder gleich 2 durch Alkoxylierung eines Polyols (h) mit einer Funktionalität größer oder gleich 2 in Gegenwart eines von Amin verschiedenen Katalysators hergestellt wird, und sodann
- 2 bis 50 Mol-% des Polyetheralkohols (d), und
- 0 bis 45 Mol-% des Polyetheralkohols (e), und
- 0 bis 50 Mol-% eines Polyols (f) mit einer Funktionalität größer oder gleich 2, ausgewählt aus der Gruppe enthaltend Glycerin, Trimethylolpropan, Pentaerythrit, mit
- 10 bis 70 Mol-% einer Dicarbonsäurezusammensetzung, enthaltend
   (a1) zu 50 bis 100 Mol-%, bezogen auf die Dicarbonsäurezusammensetzung (a), eine a-romatische Dicarbonsäure oder eine Mischung von aromatischen Dicarbonsäuren,
   (a2) zu 0 bis 50 Mol-%, bezogen auf die Dicarbonsäurezusammensetzung (a), eine oder mehrere aliphatische Dicarbonsäuren, und
- 2 bis 30 Mol-% einer oder mehrerer Fettsäuren und/ oder Fettsäurederivate, und
- 10 bis 70 Mol-% eines oder mehrerer aliphatischer oder cycloaliphatischer Diole mit 2 bis 18 C-Atomen oder Alkoxylate derselben, umgesetzt wird,
wobei sich die Mol-% der Komponenten (a) bis (f) jeweils zu 100 % addieren, und wobei pro kg Polyesterpolyol mindestens 200 mmol an Polyolen (d) mit einer OH-Funktionalität von größer oder gleich 2 umgesetzt werden.

In einer Ausführungsform der vorliegenden Erfindung umfasst die Komponente a1) mindestens ein Material aus der Gruppe enthaltend Terephthalsäure, Dimethylterephthalat (DMT), Polyethylenterephthalat (PET), Phthalsäure, Pthalsäureanhydrid (PSA) und Isophthalsäure.

In einer Ausführungsform der vorliegenden Erfindung umfasst die Komponente a1) mindestens ein Material aus der Gruppe enthaltend Terephthalsäure, Dimethylterephthalat (DMT), Polyethylenterephthalat (PET) und Pthalsäureanhydrid (PSA), bevorzugt Terephthalsäure, Dimethylterephthalat (DMT) und Polyethylenterephthalat (PET), besonders bevorzugt Terephthalsäure.

In einer Ausführungsform der vorliegenden Erfindung ist die aliphatische Dicarbonsäure a2) ausgewählt aus der Gruppe enthaltend aliphatische Dicarbonsäuren mit 4 bis 6 Kohlenstoffatomen.

In einer Ausführungsform der vorliegenden Erfindung ist die Komponente a2) zu 0 bis 30 Mol-%, bevorzugt 0 bis 10 Mol-%, besonders bevorzugt 0 Mol-%, in der Dicarbonsäurezusammensetzung a) enthalten.

In einer Ausführungsform der vorliegenden Erfindung geht die Komponente b) zu 3 bis 20 Mol-%, besonders bevorzugt zu 5 bis 18 Mol-% in das Veresterungsprodukt ein.

In einer Ausführungsform der vorliegenden Erfindung geht die Komponente c) zu 20 bis 60 Mol-%, bevorzugt zu 25 bis 55 Mol-%, besonders bevorzugt zu 30 bis 40 Mol-% in das Veresterungsprodukt ein.

In einer Ausführungsform der vorliegenden Erfindung geht die Komponente d) zu 2 bis 40 Mol-%, bevorzugt 2 bis 35 Mol-%, besonders bevorzugt zu 20 bis 25 Mol-% in das Veresterungsprodukt ein.

In einer bevorzugten Ausführungsform der vorliegenden Erfindung ist der Aminkatalysator gemäß d) ausgewählt aus der Gruppe enthaltend DMEOA (Dimethylethanolamin), Imidazol und Imidazolderivate sowie Mischungen daraus, besonders bevorzugt Imidazol.

In einer Ausführungsform der vorliegenden Erfindung ist der von Amin verschiedene Katalysator gemäß e) ausgewählt ist aus der Gruppe enthaltend KOH, Doppelmetallcyanid (DMC)-Katalysatoren, Carbene.

In einer Ausführungsform der vorliegenden Erfindung ist das aliphatische oder cycloaliphatische Diol c) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-Pentandiol und Alkoxylaten derselben.

In einer bevorzugten Ausführungsform der vorliegenden Erfindung ist das aliphatische Diol c) Diethylenglykol.

In einer Ausführungsform der vorliegenden Erfindung ist die Fettsäure oder das Fettsäurederivat b) eine Fettsäure oder ein Fettsäurederivat auf Basis nachwachsender Rohstoffe und ist ausgewählt aus der Gruppe bestehend aus Rizinusöl, Polyhydroxyfettsäuren, Ricinolsäure, Hydroxyl-modifizierte Öle, Weintraubenkemöl, schwarzem Kümmelöl, Kürbiskemöl, Borretschsamenöl, Sojabohnenöl, Weizensamenöl, Rapsöl, Sonnenblumenkemöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer bevorzugten Ausführungsform der vorliegenden Erfindung ist die Fettsäure oder das Fettsäurederivat b) Ölsäure und/oder Sojaöl und/oder Rapsöl, besonders bevorzugt Ölsäure.

In einer Ausführungsform der vorliegenden Erfindung ist der Polyetheralkohol d) mit einer Funktionalität größer oder gleich 2 ausgewählt aus der Gruppe der Umsetzungsprodukte von Glycerin, Trimethylolpropan (TMP), Pentaerythritol und Polyethylenglykol (PEG) und Mischungen daraus mit einem Alkylenoxid.

In einer Ausführungsform der vorliegenden Erfindung ist der Polyetheralkohol d) mit einer Funktionalität größer oder gleich 2 hergestellt durch Umsetzung eines Polyols e) mit einer Funktionalität größer oder gleich 2 mit Ethylenoxid und/ oder Propylenoxid, bevorzugt mit Ethylenoxid.

In einer Ausführungsform der vorliegenden Erfindung besteht der Polyetheralkohol d) mit einer Funktionalität größer oder gleich 2 aus dem Umsetzungsprodukt von Glycerin mit Ethylenoxid und/ oder Propylenoxid, bevorzugt mit Ethylenoxid.

In einer Ausführungsform der vorliegenden Erfindung besteht der Polyetheralkohol d) mit einer Funktionalität größer oder gleich 2 aus dem Umsetzungsprodukt von Trimethylolpropan mit Ethylenoxid und/oder Proplyenoxid, bevorzugt mit Ethylenoxid.

In einer Ausführungsform der vorliegenden Erfindung weist der Polyetheralkohol d) mit einer Funktionalität größer oder gleich 2 eine OH-Zahl im Bereich von 1250 bis 100 mg KOH/g, bevorzugt 950 bis 150 mg KOH/g, besonders bevorzugt 800 bis 240 mg KOH/ g auf.

In einer bevorzugten Ausführungsform der vorliegenden Erfindung besteht der Polyetheralkohol d) mit einer Funktionalität größer oder gleich 2 aus dem Umsetzungsprodukt von Trimethylolpropan oder Glycerin mit Ethylenoxid, wobei die OH-Zahl des Polyetheralkohols d) im Bereich von 500 bis 650 mg KOH/ g liegt.

In einer besonders bevorzugten Ausführungsform der vorliegenden Erfindung besteht der Polyetheralkohol d) mit einer Funktionalität größer oder gleich 2 aus dem Umsetzungsprodukt von Trimethylolpropan oder Glycerin mit Ethylenoxid, wobei die OH-Zahl des Polyetheralkohols d) im Bereich von 500 bis 625 mg KOH/g liegt, und das aliphatische oder cycloaliphatische Diol c) Diethylenglykol ist, und die Fettsäure oder das Fettsäurederivat Ölsäure ist.

In einer Ausführungsform der vorliegenden Erfindung wird ein Polyetheralkohol d) mit einer Funktionalität größer 2 eingesetzt, hergestellt durch Alkoxylierung eines Polyols g) mit einer Funktionalität größer oder gleich 3.

Zur Herstellung der erfindungsgemäßen Polyesterpolyole können die organischen, z.B. aliphatischen und vorzugsweise aromatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 280°C, vorzugsweise 180 bis 260°C gegebenenfalls unter vermindertem Druck bis zu der gewünschten Säurezahl, die vor-teilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder - derivate und mehrwertigen Alkohole vorteilhafterweise im Molverhältnis von 1:1 bis 2,1, vorzugsweise 1:1,05 bis 2,0, polykondensiert.

Die erhaltenen Polyesterpolyole besitzen vorzugsweise eine Funktionalität von 1,8 bis 4, insbesondere 2 bis 3, und ein Molekulargewicht von 300 bis 3000, vorzugsweise 400 bis 1000 und insbesondere 450 bis 800.

In einer bevorzugten Ausführungsform der vorliegenden Erfindung weist der erfindungsgemäße Polyesterpolyol eine mittlere Funktionalität von größer oder gleich 2, bevorzugt größer 2,2 auf.

Weiterhin betrifft die Erfindung ein Verfahren zur Herstellung von PU-Hartschaumstoffen. Insbesondere betrifft die Erfindung ein Verfahren zur Herstellung von Polyurethanhart-schaumstoffen durch Umsetzung von
A. mindestens einem organischen und/oder modifizierten organischen Di- und/oder Polyisocyanat mit
B. mindestens einem erfindungsgemäßen speziellen Polyesterpolyol,
C. gegebenenfalls mindestens einem weiteren Polyesterpolyol,
D. gegebenenfalls mindestens einem Polyetherol und/oder mindestens einer weiteren Verbindung mit mindestens zwei gegenüber Isocyanaten reaktiven Gruppen,
E. gegebenenfalls mindestens einem Kettenverlängerungs- und/oder Vernetzungsmittel,
F. mindestens einem Treibmittel,
G. mindestens einem Katalysator, sowie
H. gegebenenfalls mindestens einem weiteren Hilfsmittel und/oder mindestens einem Zusatzstoff, und
I. gegebenenfalls mindestens einem Flammschutzmittel.

Weitere Gegenstände der vorliegenden Erfindung sind auch Polyurethanhartschaumstoffe, erhältlich nach dem erfindungsgemäßen Verfahren, sowie die Verwendung der erfindungsgemäßen Polyesterpolyole zur Herstellung von Polyurethanhartschaumstoffen oder Polyisocyanurathartschaumstoffen.

Zur Herstellung der Polyurethanhartschaumstoffe nach dem erfindungsgemäßen Verfahren finden, neben den oben beschriebenen speziellen Polyesterpolyolen, die an sich bekannten Aufbaukomponenten Verwendung, zu denen im Einzelnen folgendes auszuführen ist.

Als organische und/oder modifizierte organische Polyisocyanate A) kommen die an sich bekannten aliphatischen, cycloaliphatischen, araliphatischen und vorzugsweise die aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpenta-methylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomeren-gemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugte Di- und Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch so genannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Di- und/oder Polyisocyanate.

Zur Herstellung von Polyurethan-Hartschaumstoffen wird ganz besonders bevorzugt Polymer-MDI eingesetzt.

Geeignete weitere Polyesterpolyole C) können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Mit verwendet werden können auch Polyetherpolyole D), die nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoff-atomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bemsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl-und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden zwei oder mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole, vorzugsweise Polyoxyethylenpolyole besitzen eine Funktionalität von vorzugsweise 2 bis 6 und insbesondere 2 bis 5 und Molekulargewichte von 300 bis 3000, vorzugsweise 300 bis 2000 und insbesondere 400 bis 1000.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3,304,273, 3,383,351, 3,523,093), 11 52 536 (GB 10 40 452) und 11 52 537 (GB 987,618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B 011 752 (US 4,304,708), US-A,4,374,209 und DE-A,32 31 497.

Die Polyetherpolyole können ebenso wie die Polyesterpolyole einzeln oder in Form von Mischungen mit verwendet werden. Ferner können sie mit den Pfropfpolyetherpolyolen oder Poly-esterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, Alkylencarbonat oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

Die Polyurethanhartschaumstoffe können unter Mitverwendung von Kettenverlängerungs- und/oder Vernetzungsmitteln (E) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispiels-weise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Als weitere Verbindungen (D) mit mindestens zwei gegenüber Isocyanat reaktiven Gruppen, also mit mindestens zwei mit Isocyanatgruppen reaktiven Wasserstoffatomen, kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. ß-Diketo-Gruppen, aufweisen.

Sofern zur Herstellung der Polyurethanhartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 0,5 bis 5 Gew.-%, bezogen auf das Gewicht der Komponente B), zum Einsatz.

Zu Treibmitteln F), welche zur Herstellung der Polyurethanhartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Daneben können physikalische Treibmittel wie niedrig siedende Kohlenwasserstoffe eingesetzt werden. Geeignet sind Flüssigkeiten, welche gegenüber den organischen, gegebenenfalls modifizierten Polyisocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Ameisensäure, Chlordifluormethan, Chlordifluorethane, Dichlorfluorethane, alle Pentanisomeren und deren Gemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.

Die Treibmittel sind entweder ganz oder teilweise in der Polyolkomponente (d.h. B+C+E+F+G+H+I) gelöst oder werden direkt vor dem Verschäumen der Polyolkomponente über einen Statikmischer zudosiert. Für gewöhnlich sind Wasser oder Ameisensäure ganz oder teilweise in der Polyolkomponente gelöst und werden das physikalische Treibmittel (beispielsweise Pentan) und gegebenenfalls der Rest des chemischen Treibmittels "online" dosiert.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis G).

Dient Wasser als Treibmittel, so wird es vorzugsweise der Aufbaukomponente B) in einer Menge von 0,2 bis 5 Gew.-%, bezogen auf die Aufbaukomponente B), zugesetzt. Der Wasserzusatz kann in Kombination mit dem Einsatz der anderen beschriebenen Treibmittel erfolgen.

Als Katalysatoren G) zur Herstellung der Polyurethanhartschaumstoffe werden insbesondere Verbindungen verwendet, die die Reaktion der reaktive Wasserstoffatome, insbesondere Hydroxylgruppen, enthaltenden Verbindungen der Komponente B) und gegebenenfalls C) mit den organischen, gegebenenfalls modifizierten Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuß verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden. Der Begriff Polyurethane soll im Folgenden auch die Schaumstoffklasse der PIR-Schaumstoffe umfassen.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Der Reaktionsmischung zur Herstellung der Polyurethanhartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Misch-polymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-%, bezogen auf 100 Gew.-% der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestem und insbesondere Kohlenstoff-fasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis C), einverleibt, wobei jedoch der Gehalt an Matten, Vliesen und Geweben aus natürlichen und synthetischen Fasern Werte bis 80 Gew.-% erreichen kann.

Als Flammschutzmittel I) können im Allgemeinen die aus dem Stand der Technik bekannten Flammschutzmittel verwendet werden. Geeignete Flammschutzmittel sind beispielsweise nicht einbaubare bromierte Substanzen, bromierte Ester, bromierte Ether (Ixol), oder bromierte Alkohole wie Dibromneopentylakohol, Tribromneopentylalkohol und PHT-4-Diol sowie chlorierte Phosphate wie z.B. Tris-(2-chlorethyl)phosphat, Tris-(2-chlorpropyl)phosphat, Tris(1,3-dichlor-propyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere flüssige Flammschutzmittel können Phosphate oder Phosphonate wie Diethylethanphosphonat (DEEP), Triethylphosphat (TEP), Dimethylpropylphosphonat (DM PP), Diphenylkresylphosphat (DPK) und andere eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyurethan-Hartschaumstoffe verwendet werden.

Im Allgemeinen hat es sich als zweckmäßig erwiesen, 5 bis 150 Gew.-%, vorzugsweise 10 bis 100 Gew.-%, der genannten Flammschutzmittel, bezogen auf die Komponente B), zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der Polyurethanhartschaumstoffe werden die organischen und/oder modifizierten organischen Polyisocyanate A), die erfindungsgemäßen speziellen Polyesterpolyole B) und gegebenenfalls Polyetherole und/oder weitere Verbindungen mit mindestens zwei gegenüber Isocyanaten reaktiven Gruppen D) und gegebenenfalls Kettenverlängerungs- und/oder Vernetzungsmittel E) in solchen Mengen zur Umsetzung gebracht, dass das Äquivalenzverhältnis von NCO-Gruppen der Polyisocyanate A) zur Summe der reaktiven Wasserstoffatome der Komponenten B), gegebenenfalls C) sowie D) bis G) 1 bis 6:1, vorzugsweise 1,1 bis 5:1 und insbesondere 1,2 bis 3,5:1, beträgt.

Die Polyurethanhartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110°C, vorzugsweise 30 bis 70°C und insbesondere 40 bis 60°C.

Die nach dem erfindungsgemäßen Verfahren hergestellten Polyurethanhartschaumstoffe weisen eine Dichte von 15 bis 300 g/l, vorzugsweise von 20 bis 100 g/l und insbesondere von 25 bis 60 g/l, auf.

### Beispiele

Die vorliegende Erfindung soll durch nachfolgende Beispiele veranschaulicht werden, wobei die Beispiele nur der Veranschaulichung gewisser Aspekte der Erfindung dienen und keinesfalls als einschränkend für den Umfang der Erfindung angesehen werden sollten:
Es wurden verschiedene Polyesterole hergestellt:
   Allgemeine Arbeitsvorschrift zur Herstellung des Polyesterpolyols

In einen 4 Liter-Rundkolben, der mit einem mechanischen Rührer, einem Thermometer und einer Destillationskolonne sowie einem Stickstoffeinleitungsrohr ausgestattet war, wurden die Dicarbonsäure, die Fettsäure oder das Fettderivat, das aliphatische oder cycloaliphatische Diol oder dessen Alkoxylate und das höher funktionelle Polyol gegeben. Nach Zugabe von 300 ppm Titantetrabutylat als Katalysator wird das Gemisch gerührt und auf 240 °C erhitzt, wobei freigesetztes Wasser kontinuierlich abdestilliert wird. Die Umsetzung wird bei 400 mbar durchgeführt. Es wird ein Polyesterol mit einer Säurezahl ≤ 1 mg KOH/g erhalten.

### Allgemeine Arbeitsvorschrift zur aminkatalysierten Herstellung des Polyetherols (Polyetherol gemäß (d) des Anspruchs 1)

Ein 960 l Druckreaktor mit Rührwerk, Mantelheizung und Kühlung, Dosiereinrichtungen für feste und flüssige Substanzen incl. Alkylenoxide sowie Einrichtungen zur Stickstoffinertisierung und einem Vakuumsystem wurde zur Trocknung auf 80°C aufgeheizt. 145,4 kg Glycerin und 1000 g einer 50%igen wässrigen Imidazol-Lösung wurden zugegeben und der Reaktor wurde dreimal mit Stickstoff inertisiert. Der Rührer wurde in Betrieb genommen und der Reaktor auf 120°C aufgeheizt. Anschließend wurden 354,0 kg Ethylenoxid dosiert (Startdruck 2,5 bar). Nach einer Abreaktionszeit von 1,5 h bei 120°C wurde der Restdruck entspannt und es wurde 30 Minuten unter Vakuum gestrippt. Es wurden 485,3 kg Polyol mit folgenden Spezifikationen erhalten:

| | |
|---|---|
| Hydroxylzahl | 527 mg KOH/g |
| Viskosität | 275 mPas bei 25°C |
| Wassergehalt | 0,006% |

### Vergleichsbeispiel 1

Es wurden 572,4 g Terephthalsäure, 316,3 g Ölsäure, 447,9 g Diethylenglykol und 907,8 g eines aufgearbeiteten Polyetheralkohols A, auf Basis Glycerin und Ethylenoxid mit einer OH-Funktionalität von 3 und einer Hydroxylzahl von 540 mg KOH/g und einer Restalkalität von < 500 mg KOH/ g, hergestellt unter KOH-Katalyse, eingesetzt, wobei nach der allgemeinen Arbeitsvorschrift zur Herstellung des Polyesterpolyols verfahren wurde. Es wurde ein Polyesterol mit einer OH-Funktionalität von 2,49 und einer Hydroxylzahl von 241 mg KOH/g erhalten.

### Vergleichsbeispiel 2

Es wurden 601,9 g Terephthalsäure, 352,9 g Sojaöl, 461,4 g Diethylenglykol und 814,3 g eines aufgearbeiteten Polyetheralkohols A, auf Basis Glycerin und Ethylenoxid mit einer OH-Funktionalität von 3 und einer Hydroxylzahl von 540 mg KOH/g, hergestellt unter KOH-Katalyse, eingesetzt, wobei nach der allgemeinen Arbeitsvorschrift zur Herstellung des Polyesterpolyols verfahren wurde. Es wurde ein Polyesterol mit einer OH-Funktionalität von 2,49 und einer Hydroxylzahl von 249 mg KOH/g erhalten.

### Vergleichsbeispiel 3

Es wurden 668,2 g Terephthalsäure, 356,2 g Sojaöl, 501,6 g Diethylenglykol und 719,0 g eines aufgearbeiteten Polyetheralkohols B, auf Basis Trimethylolpropan und Ethylenoxid mit einer OH-Funktionalität von 3 und einer Hydroxylzahl von 610 mg KOH/g, hergestellt unter KOH-Katalyse, eingesetzt, wobei nach der allgemeinen Arbeitsvorschrift zur Herstellung des Polyesterpolyols verfahren wurde. Es wurde ein Polyesterol mit einer OH-Funktionalität von 2,49 und einer Hydroxylzahl von 246 mg KOH/g erhalten.

### Vergleichsbeispiel 4

Es wurden 214,3 g Terephthalsäure, 54,6 g Ölsäure, 218,9 g Diethylenglykol und 162,1 g eines nicht neutralisierten Polyetheralkohols A, auf Basis Glycerin und Ethylenoxid mit einer OH-Funktionalität von 3 und einer Hydroxylzahl von 540 mg KOH/g, hergestellt unter KOH-Katalyse, eingesetzt, wobei nach der allgemeinen Arbeitsvorschrift zur Herstellung des Polyesterpolyols verfahren wurde. Es wurde ein 2-Phasen Produkt erhalten, das nach Neutralisation der KOH kein homogenes Produkt ergibt.

### Erfindungsgemäßes Beispiel 1

Es wurden 572,4 g Terephthalsäure, 316,3 g Ölsäure, 447,9 g Diethylenglykol und 907,8 g eines Polyetheralkohols C , auf Basis Glycerin und Ethylenoxid mit einer OH-Funktionalität von 3 und einer Hydroxylzahl von 540 mg KOH/g, hergestellt nach der allgemeinen Arbeitsvorschrift zur Herstellung des Polyetherols, eingesetzt, wobei nach der allgemeinen Arbeitsvorschrift zur Herstellung des Polyesterpolyols verfahren wurde. Es wurde ein Polyesterol mit einer OH-Funktionalität von 2,49 und einer Hydroxylzahl von 252 mg KOH/g erhalten.

### Erfindungsgemäßes Beispiel 2

Es wurden 601,9 g Terephthalsäure, 352,9 g Sojaöl, 461,4 g Diethylenglykol und 814,3 g eines Polyetheralkohols C, auf Basis Glycerin und Ethylenoxid mit einer OH-Funktionalität von 3 und einer Hydroxylzahl von 540 mg KOH/g, hergestellt nach der allgemeinen Arbeitsvorschrift zur Herstellung des Polyetherols, eingesetzt, wobei nach der allgemeinen Arbeitsvorschrift zur Herstellung des Polyesterpolyols verfahren wurde. Es wurde ein Polyesterol mit einer OH-Funktionalität von 2,49 und einer Hydroxylzahl von 248 mg KOH/g erhalten.

**Tabelle 1:**

| | OH-Funktionalität | Hydroxylzahl (mg KOH/g) | PEOL-Komponente | Katalyse bei Herstellung des PEOLs | Viskosität^{25°C} (mPa.s) |
|---|---|---|---|---|---|
| Vergleichsbeispiel 1 | 2,49 | 241 | A; Glycerin und Ethylenoxid | Neutralisiert KOH | 2500 |
| Vergleichsbeispiel 2 | 2,49 | 249 | A; Glycerin und Ethylenoxid | Neutralisiert KOH | 2640 |
| Vergleichsbeispiel 3 | 2,49 | 246 | B; Trimethylolpropan und Ethylenoxid | Neutralisiert KOH | 5086 |
| Erfindungsgemäßes Beispiel 1 | 2,49 | 252 | C; Glycerin und Ethylenoxid | Imidazol ohne Aufarbeitung | 2200 |
| Erfindungsgemäßes Beispiel 2 | 2,49 | 248 | C; Glycerin und Ethylenoxid | Imidazol ohne Aufarbeitung | 2500 |

Tabelle 1 zeigt, dass die nach dem erfindungsgemäßen Verfahren hergestellten Polyesterole keinen signifikanten Unterscheid zu den Standard-Produkten (Vergleichsbeispiele) aufweisen.

### Messmethoden

Es erfolgte eine qualitative Beurteilung der Oberflächenbeschaffenheit der PUR-Hartschäume, wobei die Deckschicht von einer 1 m * 2 m großen Schaumprobe entfernt wurde und die Oberflächen optisch beurteilt wurden.

### Bestimmung der Verarbeitbarkeit:

Die Verarbeitbarkeit wurde bestimmt, indem die Schaumbildung bei der Verarbeitung betrachtet wird. Bilden sich dabei große Treibmittelblasen, die an der Schaumoberfläche platzen und diese somit aufreißen lassen, wurde dieses als "Abbläser" bezeichnet und das System war nicht störungsfrei verarbeitbar. War dieses Störungsbild nicht zu beobachten, war die Verarbeitung störungsfrei.

### Dicke

Zur Bestimmung der Elementdicke nach der Verschäumung wurde ein Sandwichemelement mit 0,05 mm dicker Aluminiumfolie als Deckschichtmaterial im Doppelbandverfahren hergestellt und 5 Minuten nach der Herstellung die Elementdicke in der Elementmitte bestimmt.

### Herstellung von Polyurethan-Hartschaumstoffen (Variante 1):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:190 verschäumt.

### Polyolkomponente:

| | |
|---|---|
| 47,5 Gewichtsteile | Polyesterol gemäß Beispielen bzw. Vergleichsbeispielen |
| 15 Gewichtsteile | Polyetherol, mit einer OHZ von ∼ 490 mg KOH/g hergestellt durch Polyaddition von Propylenoxid an einer Saccharose/Glycerin-Mischung als Startermolekül |
| 10 Gewichtsteile | Polyetherol, bestehend aus dem Ether von Ethylenglykol und Ethylenoxid mit einer Hydroxylfunktionalität von 2 und einer Hydroxylzahl von 200 mg KOH/g |
| 25 Gewichtsteile | Flammschutzmittel Trischlorisopropylphosphat (TCPP) |
| 2,5 Gewichtsteile | Stabilisator Niax Silicone L 6635 (siliconhaltiger Stabilisator) |
| 6,5 Gewichtsteile | Pentan S 80:20 |
| ca. 2,3 Gewichtsteile | Wasser |
| 1,5 Gewichtsteile | Kaliumacetat-Lösung (47 Gew.-% in Ethylenglykol) |
| ca 1,1 Gewichtsteile | Dimethylcyclohexylamin |

### Isocyanatkomponente:

190 Gewichtsteile Lupranat® M50 (polymeres Methylendiphenyldiisocyanat (PMDI), mit einer Viskosität von ca. 500 mPa*s bei 25 °C)

Es wurden 50 mm dicke Sandwichelemente nach dem Doppelbandverfahren hergestellt. Die Rohdichte wurde dabei bei konstantem Pentangehalt von 6,5 Teilen durch Variation des Wassergehalts auf 38 +/- 1 g/L eingestellt. Die Abbindezeit wurde ferner auf 25 +/- 1 s durch Variation des Anteils des Dimethylcyclohexylamins eingestellt.

Die Ergebnisse sind in Tabelle 2 und Tabelle 3 zusammengefasst.

**Tabelle 2: Ergebnisse der Versuche zur Herstellung von 50 mm dicken Sandwichelementen nach dem Doppelbandverfahren**

| Polyesterpolyol: | Vergleichsbeispiel 1 | Erfindungsgemäßes Beispiel 1 |
|---|---|---|
| optische Beurteilung | gut | gut |
| Verarbeitung | störungsfrei | störungsfrei |

**Tabelle 3: Ergebnisse der Versuche zur Herstellung von 50 mm dicken Sandwichelementen nach dem Doppelbandverfahren**

| Polyesterpolyol: | Vergleichsbeispiel 2 | Erfindungsgemäßes Beispiel 2 |
|---|---|---|
| optische Beurteilung | gut | gut |
| Verarbeitung | störungsfrei | störungsfrei |

Tabelle 2 und 3 zeigen, dass die nach dem erfindungsgemäßen Verfahren hergestellten Polyurethan-Hartschaumstoffe die guten Verarbeitungseigenschaften beibehalten.

Ferner wurden mit den Systemen 170 mm dicke Sandwichelemente nach dem Doppelbandverfahren hergestellt. Die Rohdichte wurde dabei bei konstantem Pentangehalt von 6,5 Teilen durch Variation des Wassergehalts auf 38 +/- 1 g/L eingestellt. Die Abbindezeit wurde ferner auf 40 +/- 1 s durch Variation des Anteils des Dimethylcyclohexylamins eingestellt.

Die Ergebnisse sind in Tabellen 4 und 5 zusammengefasst:

**Tabelle 4: Ergebnisse der Versuche zur Herstellung von 170 mm dicken Sandwichelementen nach dem Doppelbandverfahren**

| Polyesterpolyol: | Vergleichsbeispiel 1 | Erfindungsgemäßes Beispiel 1 |
|---|---|---|
| Elementdicke nach Verschäumung | 180 mm | 180 mm |

**Tabelle 5: Ergebnisse der Versuche zur Herstellung von 170 mm dicken Sandwichelementen nach dem Doppelbandverfahren**

| Polyesterpolyol: | Vergleichsbeispiel 2 | Erfindungsgemäßes Beispiel 2 |
|---|---|---|
| Elementdicke nach Verschäumung | 182 mm | 181 mm |

Tabellen 4 und 5 zeigen, dass durch die Verwendung des erfindungsgemäßen Polyesterols die Maßhaltigkeit des Polyurethansystems beibehalten wird.

### Herstellung von Polyurethan-Hartschaumstoffen (Variante 2):

Weiterhin wurden Prüfplatten nach dem Doppelbandverfahren gemäß folgendem Verfahren zur Herstellung eines Polyurethan-Hartschaumstoffes (Variante 2) hergestellt.

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:170 verschäumt.

### Polyolkomponente:

| | |
|---|---|
| 58 Gewichtsteile | Polyesterol gemäß Beispielen bzw. Vergleichsbeispielen |
| 10 Gewichtsteile | Polyetherol, bestehend aus dem Ether von Ethylenglykol und Ethylenoxid mit einer Hydroxylfunktionalität von 2 und einer Hydroxylzahl von 200 mg KOH/g |
| 30 Gewichtsteile | Flammschutzmittel Trischlorisopropylphosphat (TCPP) |
| 2 Gewichtsteile | Stabilisator; Tegostab B 8443 (siliconhaltiger Stabilisator) |
| 10 Gewichtsteile | n-Pentan |
| 1,6 Gewichtsteile | Ameisensäure-Lösung (85%) |
| 2,0 Gewichtsteile | Kaliumformiat-Lösung (36 Gew.-% in Ethylenglycol) |
| 0,6 Gewichtsteile | Bis(2-dimethylaminoethyl)ether-Lösung (70 Gew.-% in Dipropylenglykol) |

### Isocyanatkomponente:

170 Gewichtsteile Lupranat® M50

Es wurden 50 mm dicke Sandwichelemente nach dem Doppelbandverfahren hergestellt. Die Rohdichte wurde dabei bei konstantem Ameisensäuregehalt durch Variation des Pentangehalts auf 41 +/- 1 g/L eingestellt. Die Abbindezeit wurde ferner auf 25 +/- 1 s durch Variation des Anteils des Bis(2-dimethylaminoethyl)ether (70 Gew.-% in Dipropylenglykol) eingestellt.

Die Komponenten wurden wie angegeben miteinander verschäumt. Die Ergebnisse der Oberflächenbeurteilung und der Verarbeitbarkeit sind in den Tabellen 6 und 7 zusammengefasst.

**Tabelle 6: Ergebnisse der Versuche zur Herstellung von 50 mm dicken Sandwichelementen nach dem Doppelbandverfahren**

| Polyesterpolyol: | Vergleichsbeispiel 1 | Erfindungsgemäßes Beispiel 1 |
|---|---|---|
| optische Beurteilung | gut | gut |
| Verarbeitung | störungsfrei | störungsfrei |

**Tabelle 7: Ergebnisse der Versuche zur Herstellung von 50 mm dicken Sandwichelementen nach dem Doppelbandverfahren**

| Polyesterpolyol: | Vergleichsbeispiel 2 | Erfindungsgemäßes Beispiel 2 |
|---|---|---|
| optische Beurteilung | gut | gut |
| Verarbeitung | störungsfrei | störungsfrei |

Tabellen 6 und 7 zeigen, dass die nach dem erfindungsgemäßen Verfahren hergestellten Polyurethan-Hartschaumstoffe die guten Verarbeitungseigenschaften beibehalten.

Ferner wurden mit den Systemen 170 mm dicke Sandwichelemente nach dem Doppelbandverfahren hergestellt. Die Rohdichte wurde dabei bei konstantem Ameisensäuregehalt durch Variation des Pentangehalts auf 41 +/- 1 g/L eingestellt. Die Abbindezeit wurde ferner auf 40 +/- 1 s durch Variation des Anteils des Bis(2-dimethylaminoethyl)ether (70 Gew.-% in Dipropylenglykol) eingestellt

Die Ergebnisse sind in den Tabellen 8 und 9 zusammengefasst:

**Tabelle 8: Ergebnisse der Versuche zur Herstellung von 170 mm dicken Sandwichelementen nach dem Doppelbandverfahren**

| Polyesterpolyol: | Vergleichsbeispiel 1 | Erfindungsgemäßes Beispiel 1 |
|---|---|---|
| Elementdicke nach Verschäumung | 180 mm | 180 mm |

**Tabelle 9: Ergebnisse der Versuche zur Herstellung von 170 mm dicken Sandwichelementen nach dem Doppelbandverfahren**

| Polyesterpolyol: | Vergleichsbeispiel 2 | Erfindungsgemäßes Beispiel 2 |
|---|---|---|
| Elementdicke nach Verschäumung | 182 mm | 181 mm |

Tabellen 8 und 9 zeigen, dass durch die Verwendung des erfindungsgemäßen Polyesterols die Maßhaltigkeit des Polyurethansystems beibehalten wird.

## Patentansprüche

1. Verfahren zur Herstellung eines Polyesterpolyols, wobei
• ein Polyetheralkohol (d) mit einer Funktionalität größer oder gleich 2 durch Alkoxylierung eines Polyols (g) mit einer Funktionalität größer oder gleich 2 in Gegenwart eines Amins als Katalysator hergestellt wird,
• sowie optional ein Polyetheralkohol (e) mit einer Funktionalität größer oder gleich 2 durch Alkoxylierung eines Polyols (h) mit einer Funktionalität größer oder gleich 2 in Gegenwart eines von Amin verschiedenen Katalysators hergestellt wird, und sodann
• 2 bis 50 Mol-% des Polyetheralkohols (d), und
• 0 bis 45 Mol-% des Polyetheralkohols (e), und
• 0 bis 50 Mol-% eines Polyols (f) mit einer Funktionalität größer oder gleich 2, ausgewählt aus der Gruppe enthaltend Glycerin, Trimethylolpropan, Pentaerythrit, mit
• 10 bis 70 Mol-% einer Dicarbonsäurezusammensetzung, enthaltend
(a1) zu 50 bis 100 Mol-%, bezogen auf die Dicarbonsäurezusammensetzung (a), eine aromatische Dicarbonsäure oder eine Mischung von aromatischen Dicarbonsäuren,
(a2) zu 0 bis 50 Mol-%, bezogen auf die Dicarbonsäurezusammensetzung (a), eine oder mehrere aliphatische Dicarbonsäuren, und
• 2 bis 30 Mol-% einer oder mehrerer Fettsäuren und/ oder Fettsäurederivate, und
• 10 bis 70 Mol-% eines oder mehrerer aliphatischer oder cycloaliphatischer Diole mit 2 bis 18 C-Atomen oder Alkoxylate derselben, umgesetzt wird,
wobei sich die Mol-% der Komponenten (a) bis (f) jeweils zu 100 % addieren, und wobei pro kg Polyesterpolyol mindestens 200 mmol an Polyolen (d) mit einer OH-Funktionalität von größer oder gleich 2 umgesetzt werden.

2. Verfahren zur Herstellung eines Polyesterpolyols gemäß Anspruch 1, wobei die aromatische Dicarbonsäure (a1) ausgewählt ist aus der Gruppe enthaltend Terephthalsäure, Dimethyl-terephthalat (DMT), Polyethylenterephthalat (PET), Phthalsäure, Pthalsäureanhydrid (PSA) und Isophthalsäure.

3. Verfahren zur Herstellung eines Polyesterpolyols gemäß Anspruch 1 oder 2, wobei die aliphatische Dicarbonsäure (a2) ausgewählt ist aus der Gruppe enthaltend aliphatische Dicarbonsäuren mit 4 bis 6 Kohlenstoffatomen.

4. Verfahren zur Herstellung eines Polyesterpolyols gemäß einem der Ansprüche 1 bis 3, wobei die Fettsäure und/oder das Fettsäurederivat (b) ausgewählt sind aus der Gruppe enthaltend Ölsäure, Sojaöl und Rapsöl.

5. Verfahren zur Herstellung eines Polyesterpolyols gemäß einem der Ansprüche 1 bis 4, wobei das aliphatische oder cycloaliphatische Diol mit 2 bis 18 C-Atomen oder Alkoxylat derselben (c) Diethylenglykol ist.

6. Verfahren zur Herstellung eines Polyesterpolyols gemäß einem der Ansprüche 1 bis 5, wobei das Polyol (g) und das Polyol (h) jeweils unabhängig voneinander ausgewählt sind aus der Gruppe enthaltend Glycerin, Trimethylolpropan, Pentaerythrit, Polyethylenglykol (PEG) und Mischungen daraus.

7. Verfahren zur Herstellung eines Polyesterpolyols gemäß einem der Ansprüche 1 bis 6, wobei das Polyol g) eine Funktionalität von größer 2 aufweist.

8. Verfahren zur Herstellung eines Polyesterpolyols gemäß einem der Ansprüche 1 bis 7, wobei der Aminkatalysator gemäß (d) ausgewählt ist aus der Gruppe enthaltend DMEOA (Dimethylethanolamin), Imidazol und Imidazolderivate sowie Mischungen daraus.

9. Verfahren zur Herstellung eines Polyesterpolyols gemäß einem der Ansprüche 1 bis 8, wobei der von Amin verschiedene Katalysator gemäß (e) ausgewählt ist aus der Gruppe enthaltend KOH, Doppelmetallcyanid (DMC)-Katalysatoren, Carbene.

10. Verfahren zur Herstellung eines Polyesterpolyols gemäß einem der Ansprüche 1 bis 9, wobei das Polyesterpolyol eine mittlere Funktionalität von größer oder gleich 2 aufweist.

## Claims

1. A process for preparing a polyester polyol, wherein
• a polyether alcohol (d) having a functionality of greater than or equal to 2 is prepared by alkoxylation of a polyol (g) having a functionality of greater than or equal to 2 in the presence of an amine as catalyst,
• and a polyether alcohol (e) having a functionality of greater than or equal to 2 is optionally prepared by alkoxylation of a polyol (h) having a functionality of greater than or equal to 2 in the presence of a catalyst other than an amine and
• from 2 to 50 mol% of the polyether alcohol (d) and
• from 0 to 45 mol% of the polyether alcohol (e) and
• from 0 to 50 mol% of a polyol (f) having a functionality of greater than or equal to 2 and selected from the group consisting of glycerol, trimethylolpropane, pentaerythritol, are reacted with
• from 10 to 70 mol% of a dicarboxylic acid composition comprising
(a1) from 50 to 100 mol%, based on the dicarboxylic acid composition (a), of an aromatic dicarboxylic acid or a mixture of aromatic dicarboxylic acids,
(a2) from 0 to 50 mol%, based on the dicarboxylic acid composition (a), of one or more aliphatic dicarboxylic acids and
• from 2 to 30 mol% of one or more fatty acids and/or fatty acid derivatives and
• from 10 to 70 mol% of one or more aliphatic or cycloaliphatic diols having from 2 to 18 carbon atoms or alkoxylates thereof,
where the mol% of components (a) to (f) add up to 100% respectively and at least 200 mmol of polyols (d) having an OH functionality of greater than or equal to 2 are reacted per kg of polyester polyol.

2. The process for preparing a polyester polyol according to claim 1, wherein the aromatic dicarboxylic acid (a1) is selected from the group consisting of terephthalic acid, dimethyl terephthalate (DMT), polyethylene terephthalate (PET), phthalic acid, phthalic anhydride (PSA) and isophthalic acid.

3. The process for preparing a polyester polyol according to claim 1 or 2, wherein the aliphatic dicarboxylic acid (a2) is selected from the group consisting of aliphatic dicarboxylic acids having from 4 to 6 carbon atoms.

4. The process for preparing a polyester polyol according to any of claims 1 to 3, wherein the fatty acid and/or the fatty acid derivative (b) is/are selected from the group consisting of oleic acid, soybean oil and rapeseed oil.

5. The process for preparing a polyester polyol according to any of claims 1 to 4, wherein the aliphatic or cycloaliphatic diol having from 2 to 18 carbon atoms or alkoxylate thereof (c) is diethylene glycol.

6. The process for preparing a polyester polyol according to any of claims 1 to 5, wherein the polyol (g) and the polyol (h) are each selected independently from the group consisting of glycerol, trimethylolpropane, pentaerythritol, polyethylene glycol (PEG) and mixtures thereof.

7. The process for preparing a polyester polyol according to any of claims 1 to 6, wherein the polyol g) has a functionality of greater than 2.

8. The process for preparing a polyester polyol according to any of claims 1 to 7, wherein the amine catalyst in (d) is selected from the group consisting of DMEOA (dimethylethanolamine), imidazole and imidazole derivatives and mixtures thereof.

9. The process for preparing a polyester polyol according to any of claims 1 to 8, wherein the catalyst other than an amine in (e) is selected from the group consisting of KOH, double metal cyanide (DMC) catalysts, carbenes.

10. The process for preparing a polyester polyol according to any of claims 1 to 9, wherein the polyester polyol has an average functionality of greater than or equal to 2.

## Revendications

1. Procédé pour la préparation d'un polyesterpolyol, dans lequel
- on prépare un polyétheralcool (d) présentant une fonctionnalité supérieure ou égale à 2 par alcoxylation d'un polyol (g) présentant une fonctionnalité supérieure ou égale à 2 en présence d'une amine comme catalyseur,
- et on prépare éventuellement un polyétheralcool (e) présentant une fonctionnalité supérieure ou égale à 2 par alcoxylation d'un polyol (h) présentant une fonctionnalité supérieure ou égale à 2 en présence d'un catalyseur différent d'une amine, puis on transforme
- 2 à 50 % en mole du polyétheralcool (d) et
- 0 à 45 % en mole du polyétheralcool (e) et
- 0 à 50 % en mole d'un polyol (f) présentant une fonctionnalité supérieure ou égale à 2, choisi dans le groupe contenant le glycérol, le triméthylolpropane, le pentaérythritol avec
- 10 à 70% en mole d'une composition d'acide dicarboxylique, contenant
(a1) à raison de 50 à 100 % en mole, par rapport à la composition d'acide dicarboxylique (a), un acide dicarboxylique aromatique ou un mélange d'acides dicarboxyliques aromatiques,
(a2) à raison de 0 à 50 % en mole, par rapport à la composition d'acide dicarboxylique (a), un ou plusieurs acides dicarboxyliques aliphatiques, et
- 2 à 30% en mole d'un ou de plusieurs acides gras et/ou dérivés d'acides gras et
- 10 à 70% en mole d'un ou de plusieurs diols aliphatiques ou cycloaliphatiques comprenant 2 à 18 atomes de carbone ou des alcoxylates de ceux-ci,
la somme des % en mole des composants (a) à (f) valant à chaque fois 100% et au moins 200 mmoles de polyols (d) présentant une fonctionnalité OH supérieure ou égale à 2 étant transformées par kg de polyesterpolyol.

2. Procédé pour la préparation de polyesterpolyol selon la revendication 1, l'acide dicarboxylique aromatique (a1) étant choisi dans le groupe contenant l'acide téréphtalique, le téréphtalate de diméthyle (DMT), le poly(téréphtalate d'éthylène) (PET), l'acide phtalique, l'anhydride de l'acide phtalique (PSA) et l'acide isophtalique.

3. Procédé pour la préparation d'un polyesterpolyol selon la revendication 1 ou 2, l'acide dicarboxylique aliphatique (a2) étant choisi dans le groupe contenant les acides dicarboxyliques aliphatiques comprenant 4 à 6 atomes de carbone.

4. Procédé pour la préparation d'un polyesterpolyol selon l'une quelconque des revendications 1 à 3, l'acide gras et/ou le dérivé d'acide gras (b) étant choisi(s) dans le groupe contenant l'acide oléique, l'huile de soja et l'huile de colza.

5. Procédé pour la préparation d'un polyesterpolyol selon l'une quelconque des revendications 1 à 4, le diol aliphatique ou cycloaliphatique comprenant 2 à 18 atomes de carbone ou un alcoxylate de celui-ci (c) étant le diéthylèneglycol.

6. Procédé pour la préparation d'un polyesterpolyol selon l'une quelconque des revendications 1 à 5, le polyol (g) et le polyol (h) étant à chaque fois choisis, indépendamment l'un de l'autre, dans le groupe contenant le glycérol, le triméthylolpropane, le pentaérythritol, le polyéthylèneglycol (PEG) et leurs mélanges.

7. Procédé pour la préparation d'un polyesterpolyol selon l'une quelconque des revendications 1 à 6, le polyol g) présentant une fonctionnalité supérieure à 2.

8. Procédé pour la préparation d'un polyesterpolyol selon l'une quelconque des revendications 1 à 7, le catalyseur de type amine (d) étant choisi dans le groupe comprenant la DMEOA (diméthyléthanolamine), l'imidazole et les dérivés d'imidazole ainsi que leurs mélanges.

9. Procédé pour la préparation d'un polyesterpolyol selon l'une quelconque des revendications 1 à 8, le catalyseur différent d'une amine selon (e) étant choisi dans le groupe comprenant KOH, les catalyseurs de type cyanure métallique double (DMC), les carbènes.

10. Procédé pour la préparation d'un polyesterpolyol selon l'une quelconque des revendications 1 à 9, le polyesterpolyol présentant une fonctionnalité moyenne supérieure ou égale à 2.
